**Europäisches Patentamt**

**European Patent Office**

**Office européen des brevets**

(19)

(11) Veröffentlichungsnummer : **0 356 456 B1**

(12) **EUROPÄISCHE PATENTSCHRIFT**

(45) Veröffentlichungstag der Patentschrift :
**02.09.92 Patentblatt 92/36**

(51) Int. Cl.⁵ : **B62D 5/10**, B62D 5/06,
B62D 7/10

(21) Anmeldenummer : **88903786.7**

(22) Anmeldetag : **12.04.88**

(86) Internationale Anmeldenummer :
**PCT/EP88/00307**

(87) Internationale Veröffentlichungsnummer :
**WO 88/07953 20.10.88 Gazette 88/23**

(54) **LENKACHSE MIT HILFSKRAFTLENKUNG.**

(30) Priorität : **16.04.87 DE 3712993**
**22.08.87 DE 3728058**

(43) Veröffentlichungstag der Anmeldung :
**07.03.90 Patentblatt 90/10**

(45) Bekanntmachung des Hinweises auf die
Patenterteilung :
**02.09.92 Patentblatt 92/36**

(84) Benannte Vertragsstaaten :
**AT DE FR GB IT SE**

(56) Entgegenhaltungen :
**DE-A- 3 414 579**
**FR-A- 1 251 296**
**GB-A- 911 340**
**US-A- 2 086 814**

(73) Patentinhaber : **ZF FRIEDRICHSHAFEN**
**Aktiengesellschaft**
**Löwentaler Strasse 100 Postfach 2520**
**W-7990 Friedrichshafen 1 (DE)**

(72) Erfinder : **EHRLINGER, Friedrich**
**Karl-Wei -Str. 15**
**W-7990 Friedrichshafen (DE)**
Erfinder : **MAURER, Dieter**
**Vollenweiderweg 10**
**W-7990 Friedrichshafen (DE)**
Erfinder : **RAUTER, Jürgen**
**Sandöschstr. 33**
**W-7990 Friedrichshafen (DE)**

(74) Vertreter : **Raue, Reimund**
**Zahnradfabrik Friedrichshafen AG Löwentaler**
**Strasse 100 Postfach 2520**
**W-7990 Friedrichshafen 1 (DE)**

EP 0 356 456 B1

## Beschreibung

Die Erfindung betrifft eine Lenkachse mit zwei an den Enden einer Achsbrücke angelenkten Radköpfen, die mittels sie schwenkbeweglich verbindender Spurstangen von einem mechanisch übersetzten Schwenkantrieb verstellbar sind.

Eine derartige Lenkachse mit den Merkmalen des Oberbegriffs des Anspruchs 1 ist z. B. durch die US-A-20 86 814 bekannt. Bei deren Schwenkantrieb handelt es sich um einen am Fahrgestell angebrachten Zahnstangentrieb, in welchem eine an beiden Enden abgedichtete und mit Kolben versehene Zahnstange mit einem Ritzel kämmt, welches einen Schwenkhebel antreibt, der mit einer Lenkschubstange auf eine beide Spurhebel an den Radköpfen direkt verbindende Spurstange wirkt.

Der Einsatz eines Schwenktriebes dieser, von der Bauweise der unterschiedlichsten Fahrgestelle abhängigen Bauart mit einer durchgehenden Spurstange von Lenkhebel zu Lenkhebel und einseitiger Anlenkung der Lenkschubstange erschwert die Anpassung an unterschiedliche Fahrzeugtypen, die Montage und den Schutz vor Bodenberührungen bzw. Hinderniskollisionen. Insbesondere wenn große Lenkwinkeleinschläge und Geländeeinsatz gefordert sind, ergeben sich Funktions- und Dimensionierungsprobleme, und im Betrieb bleibt die Gefahr von Lenkwinkelfehlern speziell im Bereich der größten Lenkwinkeleinschläge gegeben. Der Umstand, daß die Lenkkraftübertragungswirkungsgrade in der Nähe der maximalen Lenkwinkel bzw. im Bereich der Strecklage von Spurstange und Lenkhebel immer ungünstiger werden und die erforderlichen Haltekräfte, z. B. beim Lenken in weichem Boden und einem "Pflügen" der Räder bzw. auch bei harter Fahrbahn und entsprechend erhöhtem Abrieb, stark ansteigen, macht daher eine im Energieeigenbedarf und Ölhaushalt des Fahrzeuges kostspielige Leistungsreserven-Vorkehrung notwendig. Platzprobleme erhöhen sich insbesondere dann, wenn es sich um mechanisch und über Achswellen zentral angetriebene Lenkachsen handelt, weil dann der Anschluß der Kardanwelle ins Differentialgehäuse die Unterbringung des Drehantriebes auf der rückwärtigen Seite des Achsgehäuses bei zu groben Abmessungen behindert. Speziell bei der Forderung nach größten Lenkwinkeln und bei gefederten und pendelnden Achsen sind die bekannten einseitigen Anlenkungen über Lenkschubstangen bei ungeteilten Spurstangen schwierig unterzubringen und störanfällig.

Die Aufgabe der Erfindung wird hiervon ausgehend darin gesehen, eine Lenkachse zu schaffen, deren Schwenkantrieb auch bei großen Lenkwinkeln mit relativ geringen Stellkräften und Baumaßen auskommt und dennoch den Einsatz einer kollisionsgeschützten Schubstangenanordnung bei allenfalls kleineren Lenkwinkelfehlern und ohne Gefahr von Verklemmungen infolge Spurstangen-Strecklagen ermöglicht.

Diese Aufgabe wird durch die kennzeichnenden Merkmale des Anspruchs 1 gelöst. Die Zahnstange dient dabei als Kolbenstange, an deren einem Ende sich nur ein doppelseitig beaufschlagbarer Betätigungskolben befindet. Das damit besonders kompakt ausführbare Stellzylindergehäuse läßt sich wahlweise unter bzw. auf einer der Seiten der Achsbrücke quer zur Schwenkwelle des Schwenkantriebes anbringen. Der bzw. die an einem Abtriebszapfen der Schwenkwelle befestigte(n) Schwenkhebel steht (bzw. stehen) bei Geradeausstellung der Radköpfe im wesentlichen quer zur Achsbrücke und ist (bzw. sind) mit dem freien Ende an den separaten Spurstangen so angelenkt, daß sich innerhalb der vorgegebenen Lenkwinkel-Grenzen keine Strecklagen ergeben. Die mittels der mechanischen Zwischenübersetzung bewirkten Krafterhöhungen bzw. Wegveränderungen führen zu Reduzierungen des Energie- und Raumbedarfes.

An den freien Enden der/des Schwenkhebel(s) sind für die antriebsseitigen Köpfe der nun kürzer und robuster herstellbaren Spurstangen Gelenke vorgesehen, welche mit entsprechenden Gelenken an den Spurhebeln korrespondieren. Die Anordnung und Länge der Schwenkhebel kann so getroffen werden, daß sich eine so weit reichende Verschwenkung aus einer der Geradeausstellung der Räder bzw. Radköpfe entsprechenden Mittenlage heraus ermöglichen läßt, daß der effektive Lenkeinschlag deutlich über 50 Grad hinaus vergrößerbar ist, ohne daß die Hebel oder Spurstangen an der Achsbrücke anschlagen oder in Strecklage kommen und verklemmen. Hiermit gelang es, einen wahlweise symmetrisch oder auch mehr oder weniger unsymmetrisch zum Achsmittelpunkt günstig an der Achsbrücke unterbringbaren kompakt bauenden Schwenkantrieb zu schaffen, bei welchem das mit fahrzeugüblichen Arbeitsmitteldrücken erreichbare Antriebsmoment auch kurz vor der jeweiligen Endlage immer ‚noch fast gleich groß wie das Abtriebsmoment ist und Lenkwinkelfehler selbst bei unsymmetrischer Stellgliedordnung sehr klein bleiben.

Als Schwenkantriebe werden dabei an sich bekannte kolbengetriebene Zahnstangen mit drehbarem Ritzel bzw. Zahnsegment an der Schwenkwelle vorgesehen. Es ist dabei möglich, die Achse des dem Ende der Zahnstange angeformten einzelnen aber beidseits beaufschlagbaren Hubkolbens des Drehantriebes entweder quer oder parallel zur Achsbrücke und vor oder dahinter und darüber oder darunter anzuordnen. Dank der günstigeren Kräftefortleitungen ergeben sich auch bei geringem Arbeitsmitteldruck noch kleine Querabmessungen und die Spurstangen sind indirekt mittels vorzugsweise über die Achsbrücke hinwegreichendem Schwenkhebel mit ähnlicher Länge wie die Spurhebel betätigbar. Die günstigere Kraftübertragung ermöglicht Einsparungen an Volumen, Gewicht und Energie bzw. Hydraulikaufwand. Die Anordnung erlaubt zudem eine gegen

2

Bodenberührung oder Kollisionen geschütztere Unterbringung und Gestaltung von Schwenkantrieb uni Spurstangen.

Durch Verwendung von Schwenkantrieben, deren Zwischenübersetzung einen einzelnen, doppelt beaufschlagbaren Kolben, wie an einer Zahnstange aufweist und einem Ritzel an der Schwenkwelle, kann eine leistungsstarke Weg- bzw. Kraftübersetzung bei Reduzierung des Raumbedarfes, insbesondere bezüglich der Bauhöhe sowie guter Leckagesicherheit, erreicht werden. So kann mit dem Einzelkolben am einen Kopfende der Zahnstange trotz deren Einbeziehung in das Druckgehäuse auf der kolbenabgewandten Seite eine Gehäuseverkleinerung und Totraum-Einsparung erreicht werden.

Durch radiales Aneinanderpressen von Ritzel und Stange kann dabei eine Drehkraftübertragung mit kostengünstigem Spielausgleich erreicht werden.

Weitere Vorteile werden durch die in den Unteransprüchen angegebenen Ausgestaltungen ermöglicht.

– Zwei Hebel an der Schwenkwelle mit einem gewissen Spreizwinkel können die Anpassung der Hebelgeometrie an wechselnde Fahrgestellmaße erleichtern.

– Mit einer innerhalb oder außerhalb des Gehäuses vorgesehenen Winkelverstellbarkeit zwischen Schwenkwelle und Schwenkhebel, z. B. durch eine in unterschiedlichen Winkellagen einrastbare Keilwellenverbindung kann der Abstand der Gelenke der Schwenkhebel variiert werden und eine günstige Anpassung an die Geometrien unterschiedlicher Fahrgestelle erfolgen.

– Eventuell gewünschte Endanschläge lassen sich ebenfalls außerhalb oder innerhalb des Gehäuses versehen und damit günstig vor Beschädigung bzw. Fehlbedienung schützen.

– Sieht man den Schwenkantrieb in der Symmetrieachse des Achsgehäuses auf demselben vor, so bietet sich die Möglichkeit, ihn mit als Pendellager zur Aufhängung am Fahrgestell einzusetzen und die Spurstangen geschützt vor bzw. hinter der Achsbrücke unterzubringen, ohne dessen Außenprofil wesentlich zu überschreiten.

Lenkachsen mit am Achsgehäuse angebautem Schwenkantrieb und geteilter Spurstange sind zwar z. B. aus der DE-A 20 14 972 oder der GB 14 78 629 bekannt. Jedoch waren dort weder dem Hydrostatikantrieb mechanische Zwischenübersetzungen nachgeordnet, noch auch Vorkehrungen für die platzsparende Gestaltung und Anordnung des Stellzylinders sowie eine Vermeidung von Lenkfehlern und Schwenkhebel-Strecklagen und der damit verbundenen Hydrostatik-Antriebsleistungen vorgesehen. Auch waren die bekannten Lösungen nicht für mehr als 50 Grad Lenkwinkeleinschlag konstruiert. Weiterhin fehlten Hinweise, wie mit winkelverstellbarer Schwenkhebel-Lenkgeometrie Anpassungsmöglichkeiten und Endanschläge für die Verwendung bei unterschiedlichen Fahrgestellen oder Bereifungen etc. geschaffen werden könnten.

Die Erfindung ist nicht auf die Merkmalskombinationen der Ansprüche beschränkt. Für den Fachmann ergeben sich weitere sinnvolle Kombinationsmöglichkeiten von Ansprüchen und einzelnen Anspruchsmerkmalen aus der Aufgabenstellung.

Die Erfindung wird anhand einiger in nachstehenden Zeichnungen schematisch dargestellter Ausführungsbeispiele näher erläutert:

Fig. 1 zeigt eine angetriebene Lenkachse, bei welcher der ohne Stellzylindergehäuse dargestellte Schwenkantrieb leicht unsymmetrisch zur Achsmitte auf der Frontseite der Achse nahe deren Differentialgehäuse unmittelbar angebaut ist, wobei nur die eine der direkt angelenkten Spurstangen auf der den Lenkhebeln abgewandten Seite der Achse den Kardanwelleneingang kreuzt.

Fig. 2 zeigt dazu eine ziemlich symmetrische Sonderform mit etwa mittig vor dem Differential angeordnetem Schwenkantrieb, bei welchem gleichgroße Spurstangen verwendbar sind.

Fig. 2A zeigen hierzu in bzw. gegen Fahrtrichtung gesehen und 2B je eine Variante mit auf dem Achsgehäuse angeordnetem Schwenkantrieb, wobei das Differentialgehäuse einmal außermittig in Radnähe und einmal in der Symmetrieachse liegt.

Fig. 3 zeigt eine Lenkachse, bei der der Schwenkantrieb exzentrisch zur Achsmitte auf der Rückseite der Achsbrücke neben dem Kardanwellenanschluß des Differentialgehäuses vorgesehen ist und die Spurstangen auf der Frontseite gut zugänglich liegen.

Fig. 4 zeigt die Anordnungsvariante nach Fig. 1, mit den bei maximalem Lenkwinkel-Einschlag wirksamen Hebellängen.

Fig. 5 zeigt eine Lenkachse mit Schwenkantrieb der Spurstangen bei Verwendung einer Zahnstange und Ritzel aufweisenden Zwischenübersetzung.

Fig. 6 zeigt eine Lenkachse, deren Schwenkantrieb eine Schwenkwelle hat, bei der zwei über eine Vielkeilverzahnung leicht winkelverstellbar befestigte Schwenkhebel eine optimale Kraftrichtungs-Anpassung in Richtung des Lenkmomentes ermöglichen.

Fig. 7 zeigt die Draufsicht zur Fig. 6 mit einem Schwenkhebel-Paar, bei dem jeder Hebel auf einer Vielkeilwelle in diverse Winkelstellungen einrastbar ist.

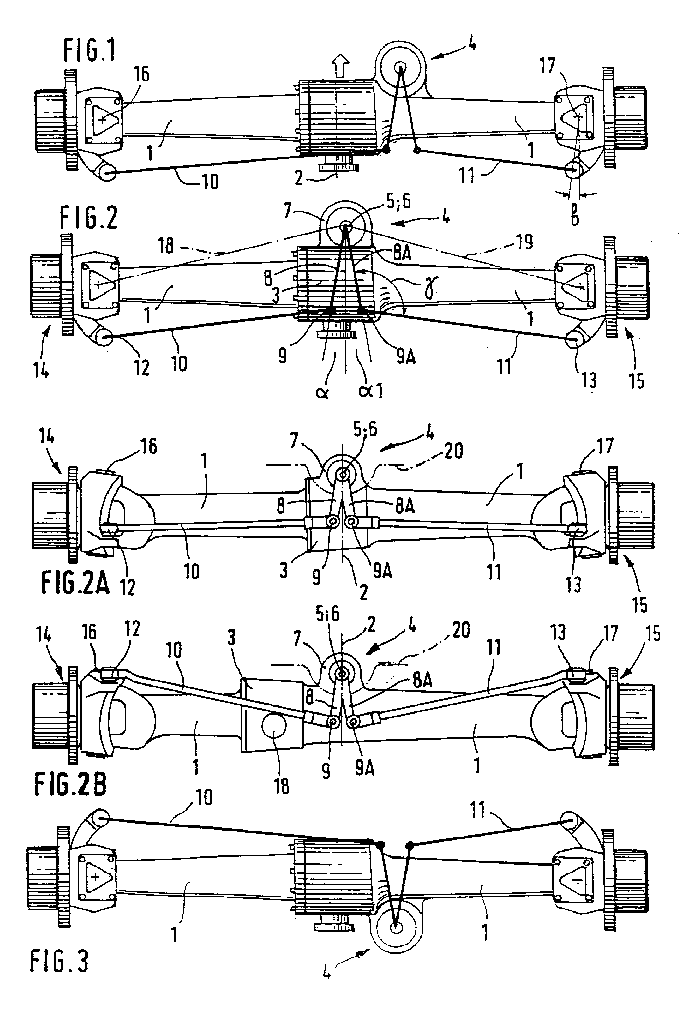

In Fig. 1 ist unmittelbar an einer Achsbrücke 1, exzentrisch zu dessen Mittenachse 2, neben einem Differential 3 ein Drehantrieb 4 auf der Frontseite in Fahrtrichtung (siehe Pfeil) angebracht. Die Schwenkwelle 5 des Schwenkantriebes 4 steht dabei vorzugsweise genau senkrecht zur Horizontalen und ist oben mit einem Abtriebszapfen 6 versehen. Der eine Zwischenübersetzung, z. B. in Form eines Zahnstangen- bzw. Gewindetriebes mitumschließende Gehäusemantel 7 des Schwenkantriebes 4 ist der Achsbrücke 1 hier einstückig angeformt, könnte aber auch angeschweißt oder in Form einer Flanschbefestigung oder dergleichen gehaltert sein. Vom Abtriebszapfen 6 in Drehrichtung links oder rechts um gewünschtenfalls jeweils bis beinahe 90 Grad verschwenkbar sind ein oder zwei Schwenkhebel 8 bzw. 8A. Deren Antriebsende ist auf dem Abtriebszapfen 6 der Schwenkwelle 5 drehfest gehalten. Und deren freies Ende ist mit mindestens einem Gelenk 9 bzw. 9A, 9B versehen, in welchen das antriebsseitige Ende je einer in entgegengesetzte Richtungen weisenden Spurstange 10, 11 geführt ist, die den die Schwenkhebel 8 bzw. 8A mit dem jeweils zugehörigen, vorzugsweise etwa gleichlangen Spurhebel 12, 13 der Radköpfe 14, 15 trieblich direkt und ohne Lenkschubstange verbinden. Die Schubstangen 10, 11 haben dabei nur etwa halbe Fahrzeugbreite und sind schon wegen ihrer Kürze weniger kollisionsgefährdet als bei einstückiger Ausführung mit über die ganze Breite des Fahrzeuges reichenden Schubstangen bekannter Art.

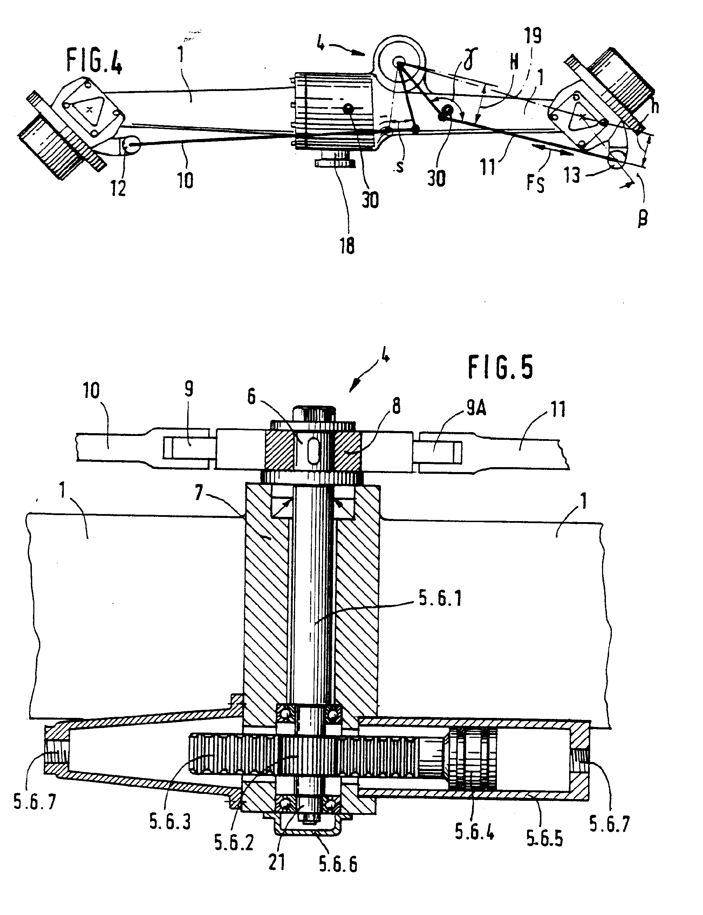

Der bzw. die Schwenkhebel 8 bzw. 8A und die Spurhebel 12, 13 sind bei der in Fig. 1 gezeigten Anordnung entgegen der Fahrtrichtung nach hinten gerichtet und mindestens so lang, wie die Abstände der Spurhebel 12, 13 vom Lenkzapfen 16, 17. Dabei übergreifen sie die Achsbrücke 1, so daß die Spurstangen 10, 11 bei Geradeausstellung überwiegend hinter der Achsbrücke 1 und parallel dazu zu liegen kommen. Bei einer derartigen Anordnung hat es sich bewährt, die Schwenkhebel 8, 8A um einen Spreizwinkel 2x $\alpha$ von der Parallele zur Mittenachse 2 durch die Schwenkwelle 5 auseinanderzuspreizen und die Gelenke 9 bzw. 9A, 9B in den freien Enden der Spurhebel 12, 13 ebenfalls so um einen Winkel $\beta$ von der Parallelen der Mittenachse 2 durch den jeweiligen Lenkzapfen 16 bzw. 17 zum Schwenkantrieb 4 hinzuverlegen, daß in Geradeausstellung je ein etwa gleichseitiges Kraftlinien-Trapez entsteht, dessen gedachte Grundlinien 18, 19 man sich als Verbindung des Abtriebszapfens 6 und der Lenkzapfen 16 bzw. 17 denken muß. Für das dargestellte Beispiel erwiesen sich etwa $\alpha$ = 16 Grad und $\beta$ = 8 Grad als günstige Werte. Aus dem Kraftlinien-Trapez wird bei maximalem Lenkeinschlagswinkel L etwa ein Parallelogramm (siehe Fig. 5) mit einem größten Winkel $\gamma$ zwischen Schwenkhebel und Spurstange in der Größe von ca. 150 bis 165 Grad.

In Fig. 2 liegen im Prinzip gleiche Verhältnisse vor, allerdings sitzt hier der Schwenkantrieb 4 nicht neben sondern vorzugsweise exakt in der Mittenachse 2 selbst gegenüber vom Kardanwelleneingang 18 vor dem Differential 3, was bei der Lenkachse eine symmetrische Gewichts- und Kraftverteilung und gleichlange Spurstangen 10, 11 ermöglicht.

In Fig. 2A und 2B wurde der Schwenkantrieb 4 mittig <u>über</u> der Achsbrücke 1 angebracht, wo er gewünschtenfalls auch als Teil eines Pendellagers zur Aufhängung des Fahrgestelles 20 an der Achsbrücke 1 mitbenutzt werden kann. Die Gelenke der Spurstangen 10, 11 an den Schwenkhebeln 8, 8A werden dabei um ca. 90° verdreht zu den Gelenken an den Spurhebeln 12, 13 vorgesehen.

In Fig. 3 befindet sich der Schwenkantrieb 4 auf der Rückseite der Achsbrücke 1 neben dem Kardanwelleneingang 18 ins Differential 3 und der/die Lenkhebel 8, 8A weisen in Fahrtrichtung, wobei die Spurstangen 10, 11 allerdings auf die kollisionsgefährdetere Frontseite der Achsbrücke 1 zu liegen kommen, jedoch z. B. zwecks Lenkwinkelveränderbarkeit besser zugänglich sind.

In Fig. 4 ist die erfindungsgemäße Lenkachse entsprechend dem Beispiel nach Fig. 1 bei maximalem Lenkeinschlagswinkel L gezeigt. Dazu ist der Schwenkhebel 8 bzw. 8A so in Richtung des bei dieser Lenksituation außen laufenden Rades geschwenkt, daß das bzw. die vordere(n) Gelenk(e) 9 bzw. 9A an ihren (seinen) freien Enden nahe der Mitte der Achsbrücke 1 zu liegen kommen und ein etwa gleichseitiges Parallelogramm entsteht. Zwischen Schwenkhebel 8A und Spurstange 11 bleibt ein Winkel $\beta$ von mindestens gleich oder kleiner 165 Grad erhalten. Dadurch bleibt auch ein senkrechter Hebelabstand H zwischen Antriebszapfen 6 und Gelenk der Schubstange(n) 10, 11 noch bei Endlage vorhanden, der ungefähr der Größe des senkrechten Hebelabstandes h zwischen der Anlenkung der Schubstangen 10 bzw. 11 und des Lenkzapfens 16 bzw. 17 entspricht. Hierdurch bleibt auch in der Lenkungsendlage immer noch ein hohes Drehmoment wirksam, ohne daß die Kolbenkraft des durch eine integrierte Zwischenübersetzung klein gehaltenen Schwenkantriebes 4 extrem verändert wäre.

In Fig. 5 hat der Schwenkantrieb 4 eine mechanische Zwischenübersetzung in Form einer Ritzelwelle 5.6.1, die ein Ritzel 5.6.2 aufweist, welches durch eine quer zur Schwenkwellenachse auf beliebige Weise angelegte Gewinde- oder Zahnstange 5.6.3 um je max. 90 Grad aus einer Nullstellung heraus verdreht wird, wenn Druck auf einen ihr zugehörigen Betätigungskolben 5.6.4 in einem aus dem Achsgehäuse 1 herausgearbeiteten bzw. ihm angeformten Stellzylinder 5.6.5 gegeben wird. Die Welle 5.6.1 bzw. das Ritzel 5.6.2 ist gegenüber dem Gehäuse 1 in üblicher Weise gelagert und durch einen vorzugsweise unten vorgesehenen Lagerdeckel 5.6.6 axial arretiert und abgedichtet. Beim Verdrehen des Ritzels 5.6.2 bewegt die Schwenkwelle 5.6.1 unmittelbar auch einen Schwenkhebel 8 bzw. 8A, von dessen freiem Ende in entsprechenden Lagerungen 9, 9A je eine Schubstange 10 bzw. 11 angelenkt sind. Durch geeignete Wahl des Übersetzungsverhältnisses Zahnstange/Ritzel können die Antriebsdrehmomente $M_{dA}$ in einem weiteren Bereich bedarfsgerecht variiert werden, um evtl. zu schwache Arbeitsmitteldrücke zu kompensieren!

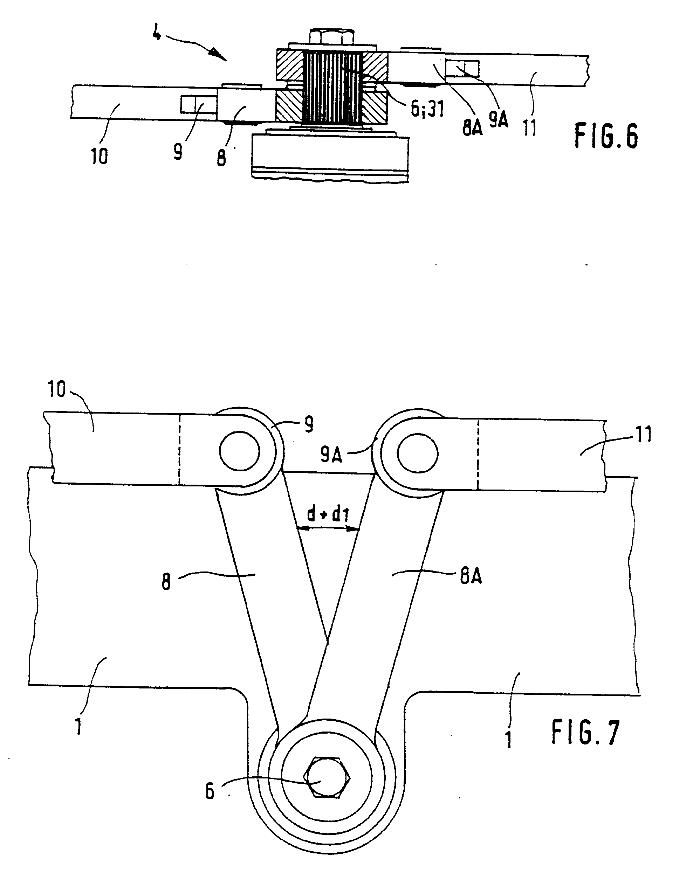

In Fig. 6 ist die Kombination eines Schwenkantriebes 4 mit zwei getrennten, übereinander gesteckten Schwenkhebeln 8, 8A vorgesehen, welche hier mittels einer Vielfachverzahnung 31 winkelveränderlich aufgesteckt und in verschiedene vorgebbare Einstellwinkel $\alpha$ bzw. $\beta$ variierbar sind.

Der Schwenkantrieb 4 hat hier einen unteren Flanschdeckel 25 mit einer gekonterten Wellenverschraubung 32.

Auf die Antriebszapfen 6 sind die Schwenkhebel 8, 8A gesteckt, an denen wiederum die Spurstangen 10, 11 angelenkt sind, welche über die Spurhebel 12, 13 die Radköpfe 14, 15 verschwenken.

In Fig. 7 ist die schematische Draufsicht auf die Anordnung nach Fig. 6 am Beispiel zweier einzeln getrennt versetzbarer Schwenkhebel 8, 8A auf einer Vielfachverzahnung 31 des Antriebszapfens 6 dargestellt. Danach ist es möglich, den Winkel $\alpha$ für jeden Schwenkhebel 8 oder 8A einzeln in kleinen Stufen zu verändern.

Um Beschädigungen beim Anschlagen in den Endstellungen auszuschließen, sind sowohl außen- als auch innenliegende, fein einstellbare Endanschläge an sich bekannter Art einbaubar. Beispielsweise kann der Boden des Stelltriebzylinders höhenverstellbar angeordnet werden. Die durch die direkte Anformung des Schwenkantriebes 4 erzielte Abstandsverkürzung zwischen Antriebszapfen 6 und Achsbrücke 1 führt zu noch kompakterer Bauweise und bruchsicherer, funktionsgünstiger Konstruktion. Bei der Kraftübertragung in der erfindungsgemäßen Anordnung ist günstig, daß das in die Schubstange 10 bzw. 11 eingeleitete Moment Fs x H bei jeder Winkelstellung voll von der Schubstange übertragen wird, da selbst bei klein gewordenem H immer noch etwa der Gegenhebel eine wirksame Länge von h in etwa gleicher Größe aufweist wie H zu Beginn der Bewegung. Somit bleibt das Lenkmoment $M_{dL}$ ungefähr gleich dem Antriebsmoment $M_{dA}$, weitestgehend unabhängig vom jeweiligen Lenkeinschlagwinkel.

Bezugszeichen

| 1 | Achsbrücke |
|---|---|
| 2 | Mittenachse von 1 |
| 3 | Differential |
| 4 | Schwenkantrieb |
| 5 | Schwenkwelle |
| 5.6.1 | Schwenkwelle |
| 5.6.2 | Ritzel |
| 5.6.3 | Zahnstange |
| 5.6.4 | Betätigungskolben |
| 5.6.5 | Stellzylinder |
| 5.6.6 | Lagerdeckel |
| 6 | Abtriebszapfen an 5 |
| 7 | Gehäusemantel von 4 |
| 8, 8A | Schwenkhebel an 6 |
| 9, 9A | Gelenk(e) in 8 bzw. 8A |
| 10 | Spurstange links |
| 11 | Spurstange rechts |
| 12 | Spurhebel links |
| 13 | Spurhebel rechts |
| 14 | Radkopf links |
| 15 | Radkopf rechts |
| 16 | Lenkzapfen links |
| 17 | Lenkzapfen rechts |
| 18 | Kardanwelleneingang |
| 19 | Lenktrapez-Hypotenuse (gedacht) |
| 20 | Fahrgestell |
| 21 | unteres Wellenende |
| 22 | oberes Wellenende von 5 |
| 23 | unteres Gehäuselager |
| 24 | oberes Gehäuselager |
| 25 | oberer Flanschdeckel |
| 26 | Flanschbolzen |

| 27 | Drehflügel von 5.7 |
|---|---|
| 28 | Standflügel von 5.7 |
| 29 | Endanschläge an 1 |
| 30 | Vielfachverzahnung an 6 |
| Winkel $\alpha$ | Abspreizwinkel des Schwenkhebels 8 gegenüber der Mittenachs-Parallele durch die Schwenkwelle 5 in Richtung Spurhebel 13 |
| Winkel $\beta$ | Abspreizwinkel des Spurhebels 13 gegenüber der Mittenachs-Parallele durch die Lenkzapfen 16 bzw. 17 in Richtung Schubstange 10 bzw. 11 |
| Winkel $\gamma$ | Streckwinkel der Schubstange 10 bzw. 11 gegenüber dem Schwenkhebel 8 bzw. 8A |
| S | Schwenkwinkel |
| L | Lenkeinschlagswinkel |
| $M_{dA}$ | Antriebsmoment |
| $M_{dL}$ | Lenkmoment |
| H | wirksame Antriebshebellänge |
| h | wirksame Lenkhebellänge |
| $F_S$ | Schubstangenkraft |

## Patentansprüche

1. Lenkachse
   – mit zwei an den Enden einer Achsbrücke (1) angebrachten Radköpfen (14, 15),
   – die über Spurhebel (12, 13) und eine Spurstange von einem Schwenkantrieb (4) verstellbar sind,
   – wobei der Schwenkantrieb (4) einen Stellzylinder (5.6.5) mit einem darin verschiebbaren Hydraulikkolben (5.6.4) mit einem Zahnstangenelement (5.6.3) hat,
   – das in ein Ritzel (5.6.2) an einer quer zur Achsbrücke (1) angeordneten Schwenkwelle (5.6.1) eingreift,
   – die mit mindestens einem an einer der Spurstangen (10, 11) angelenkten Schwenkhebel (8, 8A) fest verbunden ist,
   dadurch **gekennzeichnet**,
   – daß der Stellzylinder (5.6.5) unmittelbar an der Achsbrücke (1) befestigt ist,
   – daß der Kolben (5.6.4) an einer Stirnseite der Zahnstange (5.6.3) angeordnet ist,
   – daß für jeden Radkopf (14, 15) eine Spurstange (10, 11) am Schwenkhebel (8, 8A) angelenkt ist.

2. Lenkachse nach Anspruch 1, dadurch **gekennzeichnet**, daß für jede Spurstange (10, 11) am Schwenkhebel (8, 8A) ein Gelenk (9, 9A) vorgesehen ist.

3. Lenkachse nach Anspruch 2, dadurch **gekennzeichnet**, daß der Abstand zwischen den Gelenken (9, 9A) veränderlich ist.

4. Lenkachse nach Anspruch 1, dadurch **gekennzeichnet**, daß der Schwenkhebel (8, 8A) aus zwei Teilen besteht, die jeweils ein Gelenk (9, 9A) tragen, und deren Winkel zueinander verstellbar ist.

5. Lenkachse nach Anspruch 1, dadurch **gekennzeichnet**, daß den Endstellungen des/der Schwenkhebel(s) (8) einstellbare Endanschläge (30) unmittelbar zugeordnet sind.

6. Lenkachse nach Anspruch 1, dadurch **gekennzeichnet**, daß innerhalb des Stellzylinders (5.6.5) einstellbare Endanschläge (30) den Hub zu verändern ermöglichen.

7. Lenkachse nach Anspruch 1, dadurch **gekennzeichnet**, daß der Schwenkantrieb (4) quer über dem Achsgehäuse (1) in einer Pendellager-Achse am Fahrgestell (20) vorgesehen ist.

## Claims

1. Steering axle with two wheel heads (14, 15), which are mounted on the ends of an axle casing (1) and can be adjusted by a pivot drive (4) via track arms (12, 13) and a track rod, the pivot drive (4) comprising an operating cylinder (5.6.5) with a hydraulic piston (5.6.4), which can be displaced in the latter and comprises a rack member (5.6.3), which engages with a pinion (5.6.2) on a pivoting shaft (5.6.1), which is arranged transversely to the axle casing (1) and firmly connected to at least one pivoting lever (8, 8A), which is articulated to one of the track rods (10, 11), characterised in that the operating cylinder (5.6.5) is secured directly to the axle casing (1), that the piston (5.6.4.) is arranged at one end face of the rack (5.6.3), and that a track rod (10, 11) is articulated to the pivoting lever (8, 8A) for each wheel head (14, 15).

2. Steering axle according to claim 1, characterised in that a joint (9, 9A) is provided on the pivoting lever (8, 8A) for each track rod (10, 11).

3. Steering axle according to claim 2, characterised in that the distance between the joints (9, 9A) is variable.

4. Steering axle according to claim 1, characterised in that the pivoting lever (8, 8A) consists of two parts, each of which bears a joint (9, 9A) and the angle between which can be adjusted.

5. Steering axle according to claim 1, characterised in that adjustable limit stops (30) are directly associated with the extreme positions of the pivoting lever(s) (8).

6. Steering axle according to claim 1, characterised in that limit stops (30), which can be adjusted inside the operating cylinder (5.6.5), enable the stroke to be varied.

7. Steering axle according to claim 1, characterised in that the pivot drive (4) is provided on a swivel bearing axis on the chassis (20) transversely above the axle casing (1).


**Revendications**

1. Essieu directeur
   – comportant deux têtes de support de roue (14, 15) montées aux extrémités d'un pont (1),
   – ces têtes étant orientables par un entraînement pivotant (4) au moyen de leviers de direction (12, 13) et d'une barre de connexion,
   – l'entraînement pivotant (4) comportant un vérin (5.6.5) dans lequel peut coulisser un piston hydraulique (5.6.4) avec un élément à crémaillère (5.6.3)
   – qui est engagé sur un pignon (5.6.2) d'un arbre pivotant (5.6.1) disposé transversalement par rapport au pont (1)
   – et solidaire d'au moins un levier pivotant (8, 8A) articulé à l'une des barres de connexion (10, 11),
   **caractérisé** en ce que :
   – le vérin (5.6.5) est fixé directement au pont (1),
   – le piston (5.6.4) est disposé sur une face frontale de la crémaillère (5.6.3), et
   – une barre de connexion respective (10, 11) pour chaque tête de support de roue (14, 15) est articulée au levier pivotant (8, 8A).

2. Essieu directeur selon la revendication 1, **caractérisé** en ce qu'une articulation respective (9, 9A) est prévue pour chaque barre de connexion (10, 11) sur le levier pivotant (8, 8A).

3. Essieu directeur selon la revendication 2, **caractérisé** en ce que la distance entre lesdites articulations (9, 9A) est variable.

4. Essieu directeur selon la revendication 1, **caractérisé** en ce que le levier pivotant (8, 8A) se compose de deux éléments portant chacun une articulation (9, 9A), l'angle entre ces éléments étant réglable.

5. Essieu directeur selon la revendication 1, **caractérisé** en ce que les positions de fin de course du ou des leviers pivotants (8) sont directement définies par des butées réglables (30).

6. Essieu directeur selon la revendication 1, **caractérisé** en ce que des butées réglables (30) à l'intérieur du vérin (5.6.5) permettent de modifier la course.

7. Essieu directeur selon la revendication 1, **caractérisé** en ce que l'entraînement pivotant (4) est disposé sur le châssis (20) transversalement au-dessus du carter de pont (1) d'un essieu oscillant.

FIG.1

FIG.2

FIG.2A

FIG.2B

FIG.3

FIG.4

FIG.5

FIG.6

FIG.7

$d + d1$